(19) Europäisches Patentamt
European Patent Office
Office européen des brevets

(11) EP 3 876 162 A1

(12) EUROPEAN PATENT APPLICATION

(43) Date of publication:
08.09.2021 Bulletin 2021/36

(51) Int Cl.:
G06N 3/04 (2006.01)          G06N 3/08 (2006.01)

(21) Application number: 21160436.8

(22) Date of filing: 03.03.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.03.2020 JP 2020035716

(71) Applicant: TOYOTA JIDOSHA KABUSHIKI
KAISHA
Aichi-ken 471-8571 (JP)

(72) Inventor: TAKAHASHI, Taro
Aichi-ken, 471-8571 (JP)

(74) Representative: D Young & Co LLP
120 Holborn
London EC1N 2DY (GB)

(54) **LEARNING METHOD, LEARNING SYSTEM, AND LEARNING PROGRAM**

(57)    To reduce a learning time while improving learning accuracy. A learning method includes generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other, and performing learning by using the generated learning data.

```
                    START
                      |
                      v
        +---------------------------+
        |     GENERATE FIRST        |
        |   TIME-SERIES DATA AT     | ~ S301
        |   FIRST SAMPLING CYCLE    |
        +---------------------------+
                      |
                      v
        +---------------------------+
        |     GENERATE SECOND       |
        |   TIME-SERIES DATA AT     | ~ S302
        |  SECOND SAMPLING CYCLE    |
        +---------------------------+
                      |
                      v
        +---------------------------+
        |  GENERATE LEARNING DATA   |
        |  BY COMBINING FIRST AND   | ~ S303
        | SECOND TIME-SERIES DATA   |
        +---------------------------+
                      |
                      v
        +---------------------------+
        |  PERFORM DEEP LEARNING    | ~ S304
        |  BY USING LEARNING DATA   |
        +---------------------------+
                      |
                      v
                     END
```

Fig. 3

EP 3 876 162 A1

**Description**

BACKGROUND

The present disclosure relates to a learning method, a learning system, and a learning program for performing machine learning.

There is a learning method in which: by comparing first time-series data based on an output of a first sensor that measures a movement of a person with second time-series data based on an output of a second sensor that measures a movement of an object used by the person, a label for specifying the object is added to a section of the first time-series data; and the first time-series data for which the label has been added is used as learning data (see, for example, Japanese Unexamined Patent Application Publication No. 2018-109882).

SUMMARY

However, in the above-described learning method, when learning is performed while giving consideration to a long learning time (e.g., by using a long learning time) in order to improve the accuracy of the learning, the learning time may increase.

The present disclosure has been made to solve the above-described problem and an object thereof is to provide a learning method, a learning system, and a learning program capable of reducing the learning time (or reducing an increase in the learning time) while also improving the learning accuracy by performing the learning while giving consideration to a long learning time (e.g., by using a long learning time).

To achieve the above-described object, a first exemplary aspect is a learning method including:

generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other; and
performing learning by using the generated learning data.

In this aspect, at least one time series data may be generated by performing sampling at a sampling cycle different from the first and second sampling cycles, and the learning data may be generated by combining the generated at least one time series data with the first and second time-series data.

In this aspect, the first time-series data may be generated by performing sampling in a retrospective manner starting from a present time from the predetermined sensor value at the first sampling cycle, and the second time-series data may be generated by performing sampling in a retrospective manner starting from the present time from the predetermined sensor value at the second sampling cycle different from the first sampling cycle.

In this aspect, the same number of data may be included in each of the time-series data.

In this aspect, when the first sampling cycle is shorter than the second sampling cycle, a multiplication value obtained by multiplying the first sampling cycle by the number of data included in the first time-series data may be smaller than a multiplication value obtained by multiplying the second sampling cycle by N (N = 1 to 5).

In this aspect, the learning data may be generated by combining the first and second time-series data with a sensor value or an estimated value different from the predetermined sensor value.

In this aspect, the predetermined sensor value may be an angular velocity of a rotation mechanism, and a frictional torque of the rotation mechanism may be estimated by performing learning using the learning data.

To achieve the above-described object, another exemplary aspect is a learning system including:

data generation means for generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other; and
learning means for performing learning by using the learning data generated by the data generation means.

To achieve the above-described object, another exemplary aspect is a learning program for causing a computer to execute:

a process for generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other; and
a process for performing learning by using the generated learning data.

According to the present disclosure, it is possible to provide a learning method, a learning system, and a learning program capable of reducing the learning time (or reducing an increase in the learning time) while improving the learning accuracy by performing the learning while giving consideration to a long learning time (e.g., by using a long learning time).

The above-described and other objects, features and advantages of the present disclosure will become more fully understood from the detailed description given hereinbelow and the accompanying drawings which are given by way of illustration only, and thus are not to be considered as limiting the present disclosure.

BRIEF DESCRIPTION OF DRAWINGS

Fig. 1 is a block diagram showing a schematic system configuration of a learning system according to an embodiment;
Fig. 2 shows an example of learning data;
Fig. 3 is a flowchart showing a flow of a learning method according to an embodiment;
Fig. 4 is a graph showing a comparison between estimated values and measured values by a learning unit according to related art;
Fig. 5 is a graph showing a comparison between estimated values and measured values by a learning unit formed by an LSTM (Long Short-Term Memory) according to an embodiment;
Fig. 6 is a graph showing a comparison between estimated values and measured values by a learning unit formed by a CNN (Convolutional Neural Network) according to an embodiment;
Fig. 7 shows learning data including third time-series data; and
Fig. 8 shows an example of a configuration of a rotation mechanism.

DESCRIPTION OF EMBODIMENTS

First Embodiment

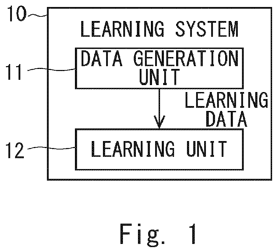

Embodiments according to the present disclosure will be described hereinafter with reference to the drawings. Fig. 1 is a block diagram showing a schematic system configuration of a learning system according to this embodiment. The learning system 10 according to this embodiment can create a model of a frictional torque of a joint part of a robot by performing, for example, deep learning. It is possible, by using the created model for the frictional torque, to accurately control the joint part of the robot in a flexible manner through electric-current control without using a torque sensor.

The learning system 10 has a hardware configuration of an ordinary computer including a processor such as a CPU (Central Processing Unit) or a GPU (Graphics Processing Unit), an internal memory such as a RAM (random access memory) and a ROM (Read Only Memory), a storage device such as an HDD (Hard Disk Drive) or an SDD (Solid State Drive), an input/output I/F (interface) for connecting peripheral devices such as a display device, and a communication I/F for communicating with external apparatuses.

The learning system 10 can implement each of functional components (which will be described later) by, for example, having the processor execute a program stored in the storage device or the internal memory while using the internal memory.

The learning system 10 according to this embodiment includes a data generation unit 11 that generates learning data and a learning unit 12 that performs learning by using the generated learning data.

The data generation unit 11 is a specific example of the data generation means. The data generation unit 11 generates first time-series data by performing sampling from predetermined sensor values at a first sampling cycle. The predetermined sensor values are, for example, a group of data (hereinafter also referred to as a data group) about an angular velocity of a rotation mechanism such as a joint mechanism of a robot. For example, values that are detected in a predetermined time period by a sensor or the like may be stored as predetermined sensor values in the internal memory, the storage device, or the like in advance. Note that the predetermined sensor values may be estimated values based on values obtained by a sensor. For example, the data generation unit 11 generates time-series data composed of 32 angular velocities by performing sampling from the data group of the angular velocity at a sampling cycle of 100 ms.

The data generation unit 11 generates second time-series data by performing sampling from the predetermined sensor values at a second sampling cycle different from the first sampling cycle. The first and second sampling cycles and the number of times of sampling are set in advance in the data generation unit 11, and a user can arbitrarily change these parameters.

The first and second sampling cycles are set (i.e., determined) based on, for example, variations of the predetermined sensor values and/or the rate of variations thereof. The data generation unit 11 generates learning data by combining the generated first and second time-series data. The data generation unit 11 outputs the generated learning data to the learning unit 12.

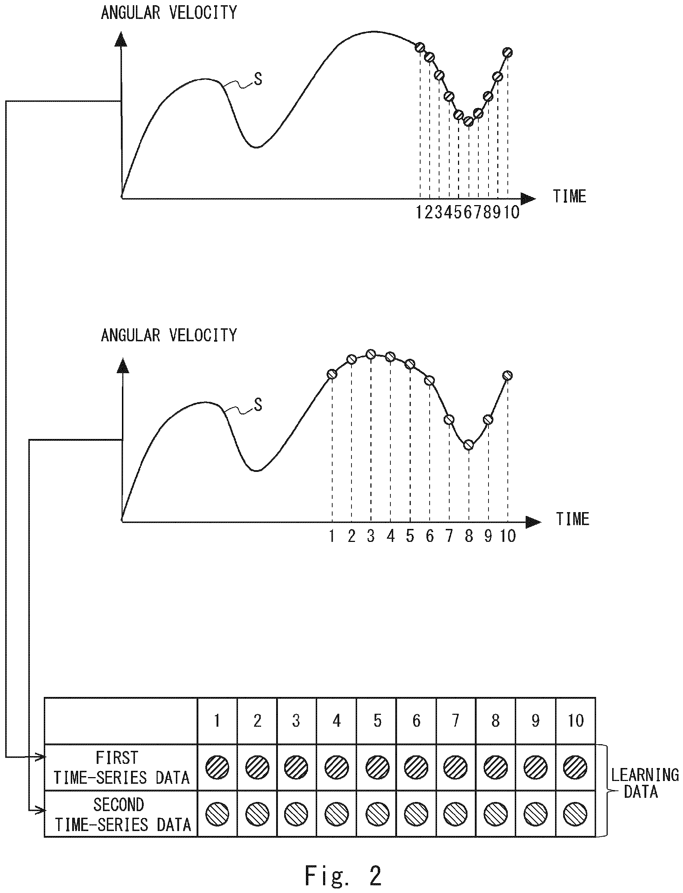

Fig. 2 is a diagram showing an example of the learning data. For example, as shown in Fig. 2, the data generation unit 11 generates first time-series data of the angular velocity by performing sampling, from a data group S of the angular velocity, in a retrospective manner starting from a present time 10 to a time 1 in the past at a first sampling cycle. Similarly, the data generation unit 11 generates second time-series data of the angular velocity by performing sampling, from the data group S of the angular velocity, in a retrospective manner starting from the present time 10 to the time 1 in the past at the second sampling cycle.

The second sampling cycle is set to a value longer than the first sampling cycle. The data generation unit 11 generates the first and second time-series data by performing sampling while using the present time as the starting point. As a result, although there are data that are obtained at the first sampling cycle, which is a shorter sampling cycle, near the present time, there are only data that are obtained at the second sampling cycle, which is a longer sampling cycle, in a time far from the present time. This is because data near the present time is considered to be important, and hence the density of data is high near the present time.

The numbers of data included in the first and second time-series data are equal to each other. It is possible to simplify the calculation of the learning by making the numbers of data in the first and second time-series data equal to each other. Note that the numbers of data included in the first and second time-series data may be different from each other.

When the first sampling cycle is smaller than the second sampling cycle, a multiplication value obtained by multiplying the first sampling cycle by the number of data in the first time-series data may be smaller than a multiplication value obtained by multiplying the second sampling cycle by N (N = about 1 to 5).

$$(\text{First sampling cycle}) \times (\text{Number of data in first time-series data}) < (\text{Second sampling cycle}) \times N$$

When the first sampling cycle is larger than the second sampling cycle, a multiplication value obtained by multiplying the first sampling cycle by N (N = 1 to 5) may be larger than a multiplication value obtained by multiplying the second sampling cycle by the number of data in the second time-series data.

$$(\text{Second sampling cycle}) \times (\text{Number of data in second time-series data}) < (\text{First sampling cycle}) \times N$$

In this way, it is possible to appropriately set a part(s) where the first and second time-series data overlap each other.

Although the data generation unit 11 generates the first and second time-series data by starting the sampling for them at the same time point, the present disclosure is not limited to this example. The data generation unit 11 may generate the first and second time-series data by starting the sampling for them at different time points. Further, the data generation unit 11 generates the first and the second time-series data by performing sampling so that the first and the second time-series data overlap each other in the temporal direction, but the present disclosure is not limited to this example. The data generation unit 11 may generate the first and the second time-series data by performing sampling so that the first and the second time-series data do not overlap each other in the temporal direction.

The learning unit 12 is a specific example of the learning means. The learning unit 12 performs machine learning such as deep learning by using the learning data generated by the data generation unit 11. The learning unit 12 inputs the learning data to a deep-learning network and thereby learns the number of network layers, weight parameters, and the like.

The learning unit 12 is formed as, for example, a recursive neural network (RNN: Recurrent Neural Network). Further or alternatively, the learning unit 12 may be formed as an LSTM (Long Short-Term Memory).

The aforementioned RNN, especially the LSTM, is often used when a model for time series data is created through deep learning. However, the learning unit 12 may be formed as a convolutional neural network (CNN: Convolutional Neural Network) which is widely used in the field of image recognition.

For example, in the deep learning for image recognition, it is common to improve the recognition accuracy by preparing a large amount of learning data and using, in addition to the original image, images that are obtained by, for example, translating, enlarging, reducing (i.e., contracting), or rotating the original image. However, in the learning for time-series data, it is uncommon to correct the original data except in the method in which random noises are added. In the learning by the LSTM, it is attempted to improve the learning accuracy by making a contrivance to the structure of a neural network that performs learning. It is believed that this is because if time-series data is translated, enlarged, or reduced (i.e., contracted), the meaning of the time-series data is changed.

Contrary to this notion, the learning system 10 according to this embodiment generates learning data that is corrected by changing the sampling cycle for the time-series data, and by doing so improves the learning accuracy by taking a long time into consideration without changing the meaning of the time-series data.

That is, in the learning system 10 according to this embodiment, the data generation unit 11 generates first time-series data by performing sampling from predetermined sensor values at a first sampling cycle, generates second time-series data by performing sampling from the predetermined sensor values at a second sampling cycle different from the first sampling cycle, and generates learning data by combining the generated first and second time-series data with each other. The learning unit 12 performs learning by using the learning data generated by the data generation unit 11.

For example, it is possible, by setting the second sampling cycle to a value longer than the first sampling cycle, to generate time-series learning data in which a longer time is taken into consideration, and thereby to improve the learning accuracy. Further, since all that needs to be done is to correct the learning data by changing the sampling cycle, the amount of the learning data (or the increase in the amount of learning data) can be reduced. Therefore, it is possible, by performing learning while giving consideration to a long learning time (e.g., by using a long learning time), to reduce the learning time (or the increase in the learning time) while improving the learning accuracy.

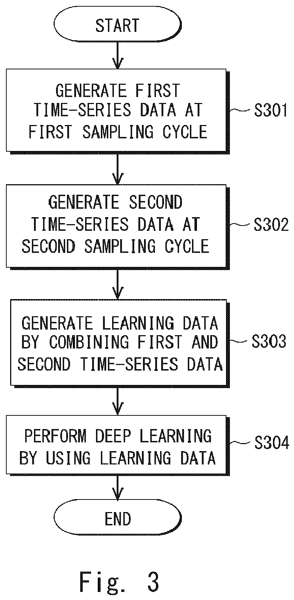

A flow of a learning method according to this embodiment will be described. Fig. 3 is a flowchart showing a flow of a learning method according to this embodiment.

The data generation unit 11 generates first time-series data by performing sampling from predetermined sensor values at a first sampling cycle (step S301).

The data generation unit 11 generates second time-series data by performing sampling from the predetermined sensor values at a second sampling cycle different from the first sampling cycle (step S302).

The data generation unit 11 generates learning data by combining the generated first and second time-series data with each other (step S303), and outputs the generated learning data to the learning unit 12.

The learning unit 12 performs deep learning using the learning data generated by the data generation unit 11 (step S304).

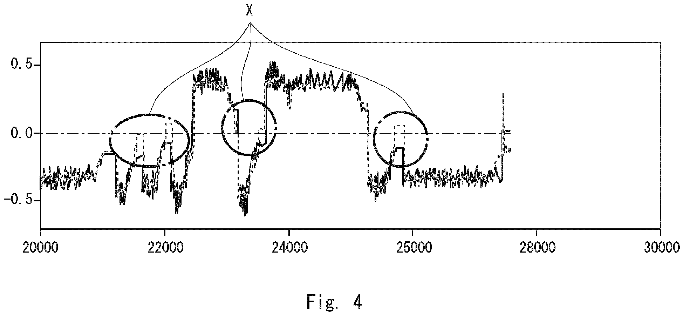

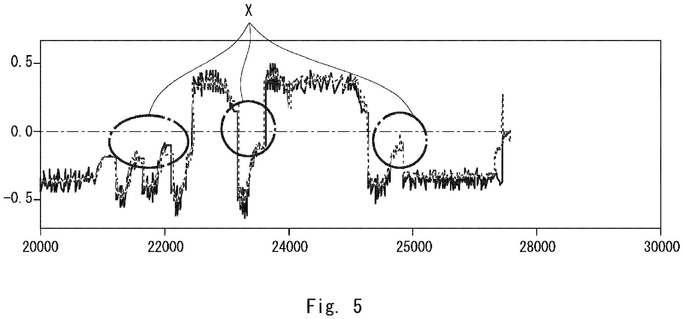

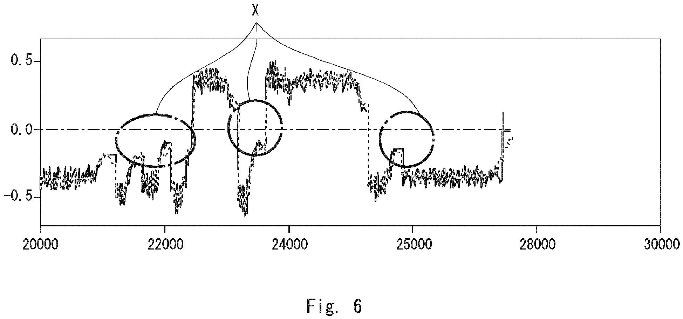

Next, a result of a comparison between estimated values estimated by the learning system according to this embodiment and measured values will be described. Fig. 4 is a graph showing a comparison between estimated values estimated by a conventional learning unit and measured values. Fig. 5 is a graph showing a comparison between estimated values estimated by a learning unit formed by an LSTM according to this embodiment and measured values. Fig. 6 is a graph showing a comparison between estimated values estimated by a learning unit formed by a CNN according to this embodiment and measured values.

Each of the learning units 12 deep-learns learning data about an angular velocity of a joint mechanism of a robot, and estimates a frictional torque of the joint mechanism as an estimated value. A torque sensor is provided in the joint mechanism of the robot. The torque sensor measures the frictional torque of the joint mechanism of the robot and outputs the measured frictional torque as a measured value. In the case of a robot that is equipped with no torque sensor, a frictional torque may be estimated from a value(s) obtained by other sensors. In Figs. 4 to 6, dotted lines indicate estimated values of the frictional torque and solid lines indicate measured values thereof.

As indicated by parts indicated by a symbol X in Fig. 4, it can be understood that the estimated values by the conventional learning unit are widely deviated from the measured values. In contrast, as indicated by parts indicated by symbols X in Figs. 5 and 6, it can be understood that the deviations between the estimated values by the learning unit 12 according to this embodiment and the measured values are smaller than those of the conventional learning unit. That is, the learning unit 12 according to this embodiment can estimate a frictional torque more accurately than the conventional learning unit does.

As described above-described, in the learning method according to this embodiment, first time-series data is generated by performing sampling from predetermined sensor values at a first sampling cycle, and second time-series data is generated by performing sampling from the predetermined sensor values at a second sampling cycle different from the first sampling cycle. Further, learning data is generated by combining the generated first and second time-series data with each other, and learning is performed by using the generated learning data. In this way, it is possible, by performing learning while giving consideration to a long learning time (e.g., by using a long learning time), to reduce the learning time (or the increase in the learning time) while improving the learning accuracy.

Second Embodiment

In this embodiment, the data generation unit 11 generates at least one time-series data by performing sampling at a sampling cycle different from both the first and second sampling cycles. The data generation unit 11 generates learning data by combining at least one generated time series data with the first and second time-series data.

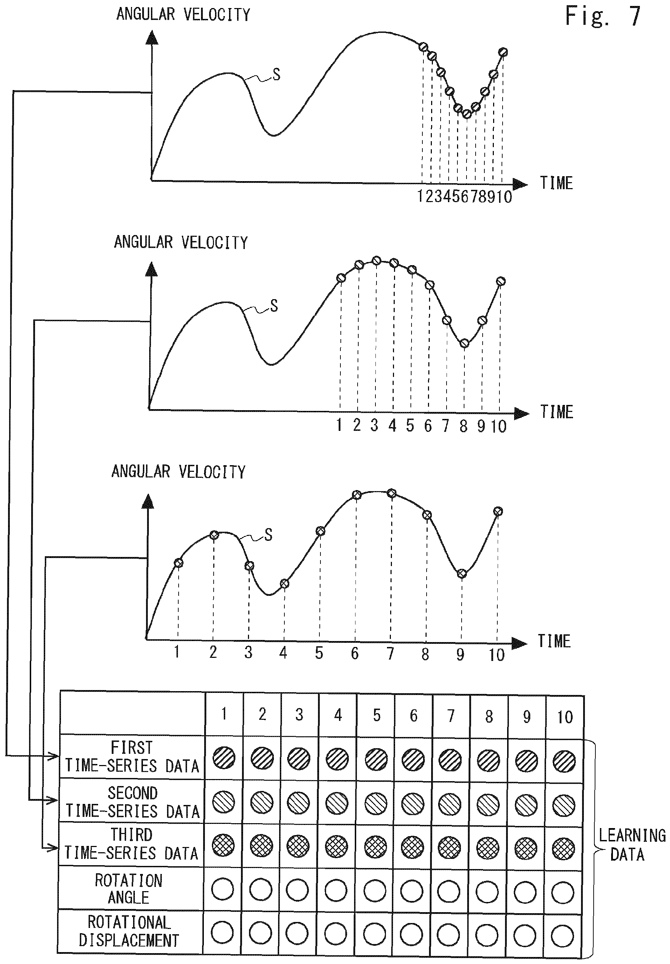

For example, as shown in Fig. 7, the data generation unit 11 generates third time-series data by performing sampling at a third sampling cycle that is different from both the first and second sampling cycles. The second sampling cycle is set to a value longer than the first sampling cycle, and the third sampling cycle is set to a value longer than the second sampling cycle. For example, the first, second third sampling cycles are set to 1 ms, 10 ms, and 100 ms, respectively.

The data generation unit 11 generates third time-series data about the angular velocity by performing sampling, from the data group S of the angular velocity, in a retrospective manner starting from the present time 10 to the time 1 in the past at a third sampling cycle.

The data generation unit 11 generates learning data by combining the generated third time-series data with the first and second time-series data. In this way, it is possible, by combining time series data obtained at a longer sampling cycle, to generate learning data in which a longer time is taken into consideration, and thereby to improve the learning accuracy.

The data generation unit 11 may generate fourth time-series data, .... , and Nth time series data by performing sampling at a fourth sampling cycle, .... , and an Nth sampling cycle in a similar manner. The fourth sampling cycle, .... , and the Nth sampling cycle are set so that they become gradually longer (i.e., the fifth sampling cycle is longer than fourth one, and the sixth sampling cycle is longer than the fifth one, and so on). In this way, it is possible to generate time-series learning data in which a still longer time is taken into consideration.

The data generation unit 11 may generate learning data by combining time-series data sampled and generated as described above with a sensor value(s) or an estimated value(s) different from the predetermined sensor values. In this way, it is possible to improve the estimation accuracy of the learning unit 12.

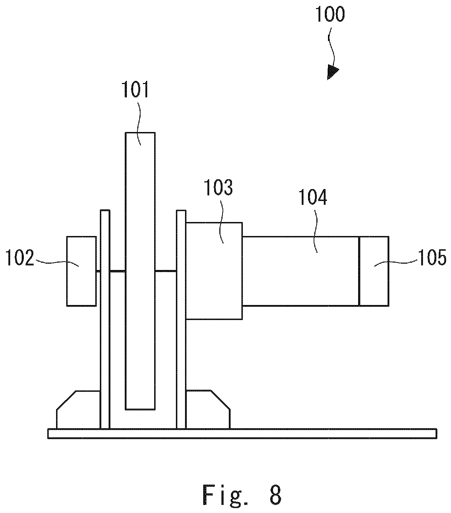

For example, as shown in Fig. 8, a rotation mechanism 100 includes a load part 101 rotatably supported on a shaft, a load-side encoder 102 connected to the load part 101, a speed reducer 103 connected to the load part 101, a motor 104 connected to the speed reducer 103, and a motor-side encoder 105 connected to the motor 104. A torque sensor may be provided in the speed reducer 103. Alternatively, a frictional torque may be estimated from a value(s) obtained by other sensors. The load-side encoder 102 detects the angular velocity of the load part 101. The motor-side encoder 105 detects the rotation angle of the motor 104.

As shown in Fig. 7, the data generation unit 11 may generate learning data by combining first to third time-series data of the angular velocity of the load part 101, the rotation angle of the motor 104, and the rotational displacement of the motor 104 from the stop position thereof.

Further, the data generation unit 11 may generate, as the time-series data of the rotation angle or the rotation displacement, a plurality of time-series data by changing the sampling cycle as in the case of the time-series data of the angular velocity. The data generation unit 11 generates learning data by combining the plurality of generated time series data of the rotation angle or the rotation displacement with the time series data of the angular velocity.

Several embodiments according to the present disclosure have been explained above. However, these embodiments are shown as examples but are not shown to limit the scope of the disclosure. These novel embodiments can be implemented in various forms. Further, their components/structures may be omitted, replaced, or modified without departing from the scope and spirit of the disclosure. These embodiments and their modifications are included in the scope and the spirit of the disclosure, and included in the scope equivalent to the invention specified in the claims.

In the present disclosure, for example, the processes shown in Fig. 3 can be implemented by having a CPU execute a computer program.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.).

The program may be provided to a computer using any type of transitory computer readable media. Examples of transitory computer readable media include electric signals, optical signals, and electromagnetic waves. Transitory computer readable media can provide the program to a computer through a wired communication line (e.g. electric wires, and optical fibers) or a wireless communication line.

Note that each unit of the learning system 10 of each of the above-described embodiments can be implemented not only by a program, but also by dedicated hardware such as an ASIC (Application Specific Integrated Circuit) or an FPGA (Field-Programmable Gate Array).

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

**Claims**

1. A learning method comprising:

   generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other; and
   performing learning by using the generated learning data.

2. The learning method according to Claim 1, wherein
   at least one time series data is generated by performing sampling at a sampling cycle different from the first and second sampling cycles, and
   the learning data is generated by combining the generated at least one time series data with the first and second time-series data.

3. The learning method according to Claim 1 or 2, wherein
   the first time-series data is generated by performing sampling in a retrospective manner starting from a present time from the predetermined sensor value at the first sampling cycle, and
   the second time-series data is generated by performing sampling in a retrospective manner starting from the present time from the predetermined sensor value at the second sampling cycle different from the first sampling cycle.

4. The learning method according to any one of Claims 1 to 3, wherein the same number of data may be included in each of the time-series data.

5. The learning method according to any one of Claims 1 to 4, wherein
   when the first sampling cycle is shorter than the second sampling cycle, a multiplication value obtained by multiplying the first sampling cycle by the number of data included in the first time-series data is smaller than a multiplication value obtained by multiplying the second sampling cycle by N (N = 1 to 5), and
   when the first sampling cycle is longer than the second sampling cycle, a multiplication value obtained by multiplying the first sampling cycle by N (N = 1 to 5) is larger than a multiplication value obtained by multiplying the second sampling cycle by the number of data included in the second time-series data.

6. The learning method according to any one of Claims 1 to 5, wherein the learning data is generated by combining the first and second time-series data with a sensor value or an estimated value different from the predetermined sensor value.

7. The learning method according to any one of Claims 1 to 6, wherein the predetermined sensor value is an angular velocity of a rotation mechanism, and
   a frictional torque of the rotation mechanism is estimated by performing learning using the learning data.

8. A learning system (1) comprising:

   data generation means (11) for generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other; and
   learning means (12) for performing learning by using the learning data generated by the data generation means (11).

9. A learning program for causing a computer to execute:

   a process for generating first time-series data by performing sampling from a predetermined sensor value at a first sampling cycle, generating second time-series data by performing sampling from the predetermined sensor value at a second sampling cycle different from the first sampling cycle, and generating learning data by combining the generated first and second time-series data with each other; and
   a process for performing learning by using the generated learning data.

10 — LEARNING SYSTEM

11 — DATA GENERATION UNIT

LEARNING DATA

12 — LEARNING UNIT

Fig. 1

Fig. 2

START

GENERATE FIRST
TIME-SERIES DATA AT
FIRST SAMPLING CYCLE — S301

GENERATE SECOND
TIME-SERIES DATA AT
SECOND SAMPLING CYCLE — S302

GENERATE LEARNING DATA
BY COMBINING FIRST AND
SECOND TIME-SERIES DATA — S303

PERFORM DEEP LEARNING
BY USING LEARNING DATA — S304

END

Fig. 3

Fig. 4

Fig. 5

Fig. 6

Fig. 7

ANGULAR VELOCITY

ANGULAR VELOCITY

ANGULAR VELOCITY

| | 1 | 2 | 3 | 4 | 5 | 6 | 7 | 8 | 9 | 10 |
|---|---|---|---|---|---|---|---|---|---|---|
| FIRST TIME-SERIES DATA | | | | | | | | | | |
| SECOND TIME-SERIES DATA | | | | | | | | | | |
| THIRD TIME-SERIES DATA | | | | | | | | | | |
| ROTATION ANGLE | | | | | | | | | | |
| ROTATIONAL DISPLACEMENT | | | | | | | | | | |

LEARNING DATA

100

101

103    104

102    105

Fig. 8

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 570 890 A (GREEN RUNNING LTD [GB]) 14 August 2019 (2019-08-14) * page 6, line 21 - page 18, line 25 * * figures 2, 3a * ----- | 1-9 | INV. G06N3/04 G06N3/08 |

TECHNICAL FIELDS
SEARCHED      (IPC)

G06N

The present search report has been drawn up for all claims

| Place of search | Date of completion of the search | Examiner |
|---|---|---|
| The Hague | 24 July 2021 | Baldan, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 0436

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2021

| Patent document cited in search report | | Publication date | Patent family member(s) | | Publication date |
|---|---|---|---|---|---|
| GB 2570890 | A | 14-08-2019 | GB | 2570890 A | 14-08-2019 |
| | | | WO | 2019155214 A1 | 15-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018109882 A